# EUROPÄISCHE PATENTSCHRIFT

(11) **EP 2 606 254 B1**
(45) Veröffentlichungstag und Bekanntmachung des Hinweises auf die Patenterteilung: **30.05.2018**
(21) Anmeldenummer: 11741523.2
(22) Anmeldetag: 04.08.2011
(51) Int. Cl.: H02K 26/00, F16F 15/03, F16F 9/12, B60G 13/14, H02K 35/00, H02K 35/04, H02K 7/18, H02K 16/00

(54) **ELEKTRISCHER DÄMPFER FÜR EIN KRAFTFAHRZEUG**
ELECTRIC DAMPER FOR A MOTOR VEHICLE
AMORTISSEUR ÉLECTRIQUE POUR UN VÉHICULE À MOTEUR

(30) Priorität: 21.08.2010 DE 102010035084
(43) Veröffentlichungstag der Anmeldung: 26.06.2013
(73) Patentinhaber: Audi AG, 85045 Ingolstadt (DE)
(72) Erfinder: WILLEMS, Marco, 85053 Ingolstadt (DE)
(86) Internationale Anmeldenummer: PCT/EP2011/003898
(87) Internationale Veröffentlichungsnummer: WO 2012/031650

(56) Entgegenhaltungen:
- US-A- 3 343 017
- US-A- 3 931 535
- US-A1- 2010 207 309

## Beschreibung

Die Erfindung betrifft einen elektrischen Dämpfer, insbesondere für ein Kraftfahrzeug, nach dem Oberbegriff des Patentanspruches 1.

Ein solcher elektrischer Dämpfer kann anstelle eines hydraulischen Dämpfers in einem schwingungsfähigen mechanischen System eines Kraftfahrzeugs eingesetzt werden. Wie der hydraulische Dämpfer entzieht auch der elektrische Dämpfer dem schwingungsfähigen System Energie. Diese wird jedoch nicht in thermische Energie umgewandelt, sondern wird mit der Schwingungsenergie vielmehr ein dem elektrischen Dämpfer zugeordneter Generator angetrieben, der die Schwingungsenergie in elektrische Energie umwandelt, die in das Bordnetz des Kraftfahrzeuges gespeist werden kann.

Aus der DE 101 15 858 A1 ist ein elektrischer Dämpfer für ein Kraftfahrzeug bekannt, der eine Relativbewegung zwischen zwei Bauteilen dämpfen kann. Der elektrische Dämpfer weist einen elektrischen Generator zur Erzeugung einer Induktionsspannung auf, der mittels der Relativbewegung zwischen den beiden Bauteilen angetrieben werden kann. Der Generator weist in an sich bekannter Weise einen Stator, einen Rotor sowie zugehörige Induktionswicklungen sowie Feldmagnete auf, wodurch die Induktionsspannung erzeugt wird.

In üblichen Generatoren trägt der feststehende Stator die Induktionswicklungen, während der rotierende Rotor die Permanentmagnete oder alternativ durch einen Erregerstrom aktivierbare Elektromagnete trägt. Der Rotor ist dabei als ein massives Eisenteil ausgeführt, um den magnetischen Fluss zu erhöhen sowie das magnetische Feld zu homogenisieren. Die Ausführung des Rotors als ein massives Eisenteil führt zu einem erhöhten Massenträgheitsmoment des Rotors, welches je nach Einsatzzweck des Generators Vorteile oder Nachteile mit sich bringt und somit eine wichtige mechanische Kenngröße von Generatoren ist.

Insbesondere bei hochdynamischen Anwendungen, wie bei der vorliegenden Schwingungsdämpfung zweier Bauteile, stellen die aus dem Massenträgheitsmoment resultierenden Kräfte jedoch eine Bauteilgrenze dar, die bei der Auslegung des elektrischen Dämpfers ein beschränkender Faktor ist.

Aus der US 3 931 535 A ist eine gattungsgemäße elektrische Maschine bekannt, die geeignet ist, als ein elektrischer Dämpfer für ein Fahrzeug zum Dämpfen einer Relativbewegung zwischen zwei Bauteilen.

Aus der US 2010/207309 A1 ist ein elektrischer Dämpfer für ein Fahrzeug zum Dämpfen einer Relativbewegung zwischen zwei Bauteilen bekannt. Der elektrische Dämpfer weist einen elektrischen Generator zur Erzeugung einer Induktionsspannung auf, der durch die Relativbewegung zwischen den beiden Bauteilen antreibbar ist. Der Generator weist einen Stator, einen Rotor sowie zugehörige Induktionswicklungen sowie Feldmagnete auf. Aus der US 3 343 017 A ist ein Elektromotor bekannt, bei dem der Rotor zweiteilig mit einem inneren, feststehenden Eisenkern und einem radial äußeren Hohlrad ausgeführt ist, dass Elektromagnete trägt, die mit einem Erregerstrom aktivierbar sind.

Die Aufgabe der Erfindung besteht darin, einen elektrischen Dämpfer zur Dämpfung einer Relativbewegung zwischen zwei Bauteilen bereitzustellen, der auch bei hochdynamischen Dämpfungsvorgängen dauerhaft betriebssicher ohne Bauteilbeschädigungen arbeitet.

Die Aufgabe ist durch die Merkmale des Patentanspruches 1 gelöst. Bevorzugte Weiterbildungen der Erfindung sind in den Unteransprüchen offenbart.

Gemäß dem Patentanspruch 1 ist der Rotor zweiteilig mit einem inneren, feststehenden Eisenkern und mit einem radial äußeren Hohlrad ausgebildet, das die Induktionswicklungen oder die Feldmagnete des Generators trägt. Erfindungsgemäß wird somit weiterhin ein Eisenkern für den Rotor vorgesehen. Dieser ist jedoch von der Rotationsbewegung des rotierenden Hohlrades des Rotors gelöst. Die Masse des Eisenkerns geht somit nicht mehr in das Massenträgheitsmoment des Rotors ein, wodurch die Massenkräfte im dynamischen Betrieb des Generators sinken. Durch das erfindungsgemäß reduzierte Massenträgheitsmoment des Rotors wird daher der bei dynamischem Betrieb entstehende Anteil von Massenkräften im Gesamtausgangsmoment des Generators geringer.

Gemäß dem Patentanspruch 1 ist ein besonders kompakter Generator dadurch erreicht, dass sowohl der Stator als auch das durchmesserkleinere Rotor-Hohlrad becherförmig ausgestaltet sind und mit den zugewandten offenen Stirnseiten ineinander geschoben sind. Bei einer derart verschachtelten Anordnung ergibt sich eine vorteilhaft geringe Baulänge des elektrischen Dämpfers.

Bevorzugt kann der Generator ein sogenannter Innenpolgenerator sein. Bei einem solchen Generator liegen die Induktionswicklungen außen im Stator, während die Feldmagnete sich am Hohlrad des Rotors befinden. Diese Bauart hat den Vorzug, dass der im Stator erzeugte Induktionsstrom unmittelbar an festen Klemmen abgenommen werden kann. Die mit den Induktionswicklungen zusammenwirkenden Feldmagnete können als Permanentmagnete oder als Elektromagnete ausgeführt sein. Bevorzugt ist jedoch die Ausführung als Elektromagnete, die durch einen verhältnismäßig kleinen Erregerstrom aktiviert werden können.

Um eine möglichst reibungsfreie Rotationsbewegung des Rotor-Hohlrades zu erzielen, ist der feststehende Eisenkern über einen freien Ringspalt vom radial äußeren Hohlrad beabstandet. Der freie Ringspalt kann in einer besonders einfachen Ausführung ein Luftspalt sein. Zur Steigerung des magnetischen Flusses ist die Spaltbreite des Ringspaltes entsprechend gering auszulegen. Demgegenüber ist es für eine weitere Steigerung des magnetischen Flusses von Vorteil, wenn der oben erwähnte freie Ringspalt zwischen Eisenkern und Rotor-Hohlrad mit einem hochpermeablen Fluid gefüllt ist. Das hochpermeable Fluid führt in Doppelfunktion sowohl zu einer Steigerung des magnetischen Flusses als auch bei entsprechender Viskosität zu einer zusätzlichen Dämpfung der Relativbewegung zwischen den beiden Bauteilen.

Für eine kompakte Gestaltung des Dämpfers kann das Hohlrad des Rotors ein rotationssymmetrischer, zylindrischer Hohlkörper sein, dessen eine Stirnseite in eine Antriebswelle übergeht. Die Antriebswelle treibt somit das Rotor-Hohlrad an. Die Antriebswelle ist hierzu mittelbar oder unmittelbar mit einem oder beiden Bauteilen bewegungsgekoppelt, um aufgrund der Bauteil-Relativbewegung das Rotor-Hohlrad antreiben zu können. Die gegenüberliegende Stirnseite des Rotor-Hohlrades ist demgegenüber offen gestaltet, so dass der feststehende Eisenkern in den Hohlraum des Hohlrades einragen kann.

Der im Hohlrad des Rotors angeordnete Eisenkern kann bauteiltechnisch einfach unmittelbar an einer stirnseitigen Tragwand des Stators befestigt sein. Im Sinne einer Bauteilreduzierung sowie zur kompakten Ausführung ist es von Vorteil, wenn der Stator zusammen mit dem Eisenkern eine einstückige Baueinheit bildet. Neben der oben erwähnten stirnseitigen Tragwand weist der Stator eine hohlzylindrische Umfangswand auf, an dessen Innenseite die Induktionswicklungen getragen werden können. Die hohlzylindrische Umfangswand des Stators ist zusammen mit dem radial innen angeordneten Eisenkern rotationssymmetrisch um eine gedachte Zylinderachse der Baueinheit ausgebildet, wobei der radial innere Eisenkern über einen freien Montagespalt der radial äußeren Umfangswand des Stators beabstandet ist. Im Zusammenbauzustand läuft in diesem ringförmigen Montagespalt das Hohlrad des Rotors.

Für eine leichtgängige Rotationsbewegung kann das Rotor-Hohlrad über ein Drehlager unmittelbar auf dem feststehenden Eisenkern abgestützt sein. Zur Reduzierung der Baulänge des Generators ist es von Vorteil, wenn das Drehlager innerhalb des vom Rotor-Hohlrad begrenzten Hohlraumes angeordnet ist.

Erfindungsgemäß wird das Rotor-Hohlrad mittels der Relativbewegung zwischen den beiden Bauteilen angetrieben. Dabei wird die Relativbewegung unter Zwischenschaltung eines Getriebes auf das Rotor-Hohlrad übertragen. Mit dem Getriebe können unterschiedliche Bewegungsverläufe in eine Drehbewegung übertragen werden, die über die oben erwähnte Antriebswelle in das Rotor-Hohlrad eingeleitet wird.

Der Stator des Generators ist bauraumgünstig zugleich als ein Getriebeelement in dem Getriebe integriert. Durch diese Konfiguration ergibt sich eine sehr klein bauende Einheit. Darüber hinaus ist das sich durch obige Konfiguration ergebende Funktionsprinzip des elektrischen Dämpfers unterschiedlich zum Stand der Technik, da in diesem Fall der Stator kein feststehendes Bauteil ist, sondern vielmehr beim Dämpfungsvorgang selbst aktiv gedreht wird. Die Drehbewegung des Stators wird über das Getriebe zum Rotor-Hohlrad übertragen. Durch entsprechende Getriebeübersetzung kann das Rotor-Hohlrad mit im Vergleich zum Stator wesentlich größerer Drehzahl gedreht werden. Dadurch wird in an sich bekannter Weise im Generator die Induktionsspannung erzeugt.

Das erste Bauteil kann beispielhaft ein Radführungselement sein, während das zweite Bauteil der Fahrzeugaufbau sein kann. In diesem Fall kann das Radführungselement über eine Schwenkachse drehgelenkig mit dem Fahrzeugaufbau verbunden sein. Für eine äußerst kompakte Gestaltung des Dämpfers kann die Schwenkachse koaxial zur Drehachse des Rotors und/oder des Stators angeordnet sein. Dabei kann das Radführungselement drehfest mit dem Stator verbunden sein, während der Stator gleichzeitig über eine Drehlagerung im Fahrzeug fest am Fahrzeugaufbau drehgelagert ist. Durch die oben angegebenen konstruktiven Merkmale kann der elektrische Dämpfer besonders kompakt ausgeführt werden. Durch die kompakte Ausgestaltung des elektrischen Dämpfers kann dieser bauraumgünstig innerhalb eines Befestigungsauges des Radführungselementes eingesetzt sein.

Durch die oben angegebene Konfiguration ergibt sich eine verschachtelte Bauweise, in der der radial innere Eisenkern sowie das Rotor-Hohlrad und die Stator-Umfangswand in Radialrichtung fluchtend zueinander angeordnet sind.

Nachfolgend ist ein Ausführungsbeispiel der Erfindung anhand der beigefügten Figuren beschrieben.

Es zeigen:
- Fig. 1: in grob schematischer Darstellung eine Radaufhängung eines Fahrzeugrades;
- Fig. 2: ein Radführungselement mit einem, in einem Befestigungsauge eingesetzten elektrischen Dämpfer;
- Fig. 3: in einer schematischen Seitenschnittdarstellung den elektrischen Dämpfer in einer beispielhaften Einbaulage; und
- Fig. 4: den elektrischen Dämpfer eingebauten Generator entlang einer Schnittebene aus der Fig. 3.

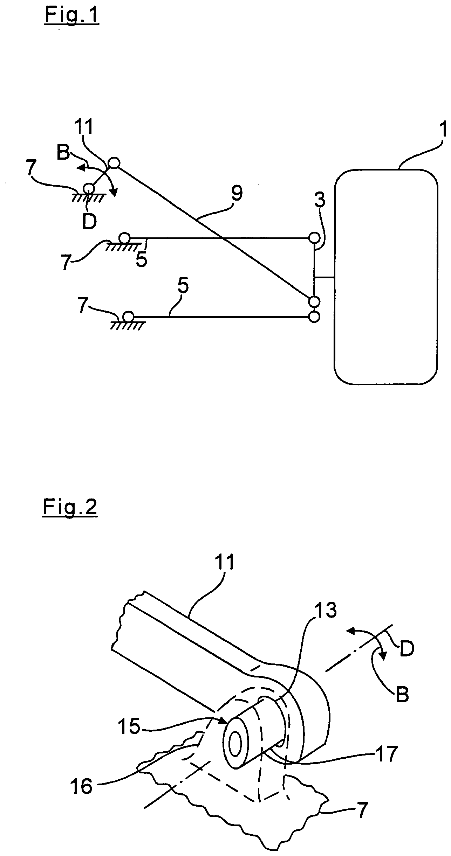

In der Fig. 1 ist die Radaufhängung eines Fahrzeugrades 1 eines Kraftfahrzeuges gezeigt. Das Fahrzeugrad 1 ist an einem Radträger 3 drehgelagert. Der Radträger 3 ist über Querlenker 5 am Fahrzeugaufbau 7 angelenkt. Zusätzlich wirkt ein Schräglenker 9 auf den Radträger 3, der über eine Koppelstange 11 mit dem Fahrzeugaufbau 7 verbunden ist. Die Koppelstange 11 ist gemäß der Fig. 1 über eine Schwenkachse D drehgelenkig mit dem Fahrzeugaufbau 7 verbunden.

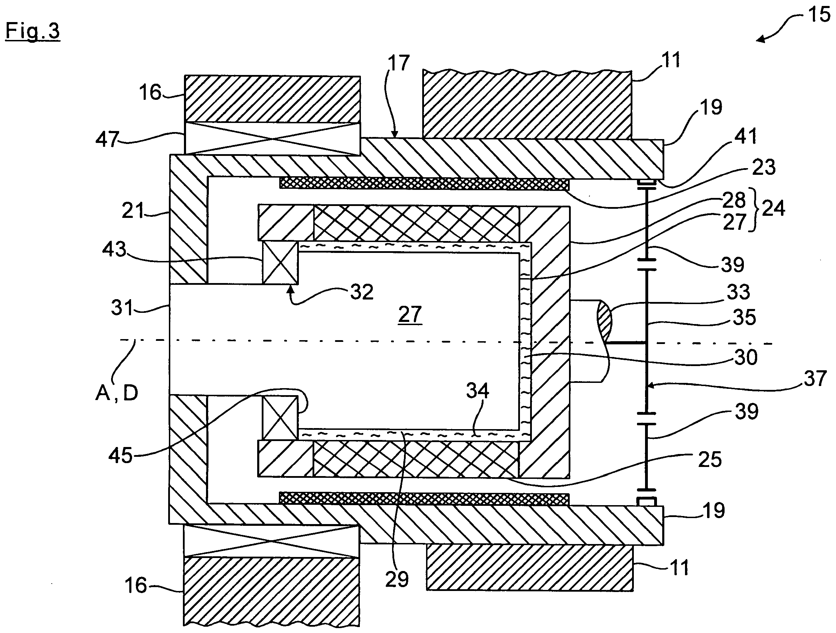

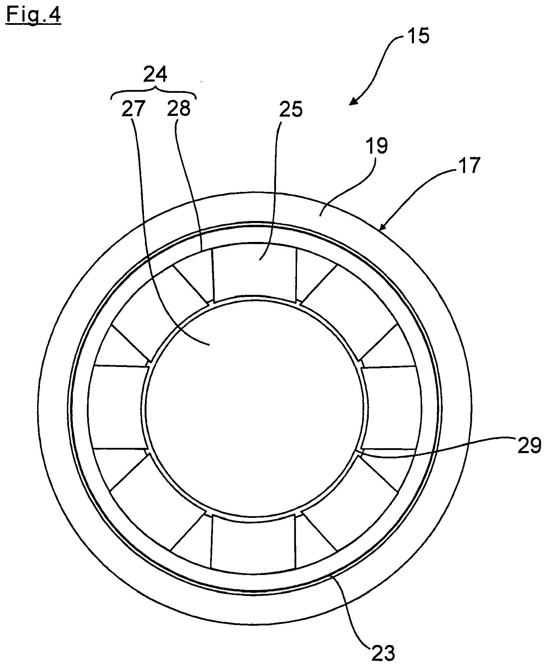

In der Fig. 2 ist die Anlenkstelle zwischen der Koppelstange 11 und dem Fahrzeugaufbau 7 gezeigt. Demzufolge weist die Koppelstange 11 ein Befestigungsauge 13 auf. In dem Befestigungsauge 13 ist ein in den nachfolgenden Fig. 3 und 4 detaillierter gezeigter elektrischer Dämpfer 15 eingesetzt. Der elektrische Dämpfer 15 verbindet dabei die Koppelstange 11 drehgelenkig mit einer am Fahrzeugaufbau 7 vorgesehenen, gestrichelt angedeuteten Haltekonsole 16. In der Fig. 3 ist die Anlenkstelle der Fig. 2 in vergrößerter Schnittdarstellung gezeigt. In der Fig. 3 weist der elektrische Dämpfer 15 einen Generator auf, der einen radial äußeren Stator 17 hat. Der äußere Stator 17 des Generators sitzt im Presssitz drehfest in dem Befestigungsauge 13 der Koppelstange 11. Der Stator 17 ist ein rotationssymmetrisches, zylindrisches Bauteil mit einer radial äußeren Umfangwand 19, die in der Fig. 3 links mit einer stirnseitigen Tragwand 21 geschlossen ist.

Der Generator ist im gezeigten Ausführungsbeispiel als ein Innenpolgenerator ausgeführt, bei dem die in der Fig. 3 nur angedeuteten Induktionswicklungen 23 an der Innenseite der Umfangswand 19 des Stators 17 verlaufen. Radial innerhalb des Stators 17 ist ein Rotor 24 vorgesehen. Dieser trägt die mit den Induktionswicklungen 23 zusammenwirkenden Elektromagnete 25, die über einen Erregerstrom aktivierbar sind.

Wie aus der Fig. 3 und 4 hervorgeht, ist der Rotor 24 zweiteilig aus einem inneren, feststehenden massiven Eisenkern 27 und einem radial äußeren Hohlrad 28 ausgeführt, das die Elektromagnete 25 trägt. Der Eisenkern 27 ist gemäß der Fig. 3 über einen freien radialen Ringspalt 29 sowie einen stirnseitigen Spalt 30 von dem Hohlrad 28 des Rotors 24 beabstandet. Diese freien Spalte 29, 30 sind in dem gezeigten Ausführungsbeispiel mit einer hochpermeablen Flüssigkeit 34 gefüllt, die einerseits den magnetischen Fluss verstärkt und andererseits eine ausreichend große Viskosität aufweist, um eine Schwingungsdämpfung zwischen den Bauteilen 7, 11 zu unterstützen.

Gemäß der Fig. 3 geht der Eisenkern 27 an einer Abstufung 32 in einen Befestigungszapfen 31 mit geringerem Durchmesser über, der drehfest in der stirnseitigen Tragwand 21 des becherförmigen Stators 17 befestigt ist. Die Mittelachsen des Eisenkerns 27 und des Stators 17 sind dabei koaxial zueinander ausgeführt, so dass sich insgesamt eine rotationssymmetrische einstückige Baueinheit bestehend aus dem Stator 17 und dem Eisenkern 27 ergibt.

In dem, zwischen dem Eisenkern 27 und der Umfangswand 19 des Stators 17 befindlichen Montagespalt läuft gemäß der Fig. 3 oder 4 das Rotor-Hohlrad 28. Das Rotor-Hohlrad 25 ist ebenfalls als ein rotationssymmetrischer, zylindrischer Hohlkörper ausgeführt. Dieser ist analog zum Stator 17 becherförmig gestaltet und mit seiner offenen Seite gegensinnig zum Stator 17 ausgerichtet. An den geschlossenen Boden des Hohlrads 28 schließt sich in der Fig. 3 eine Antriebswelle 33 an. Die Antriebswelle 33 trägt gemäß der Fig. 3 ein Sonnenrad 35 eines Planetengetriebes 37, das das Rotor-Hohlrad 28 mit dem Stator 17 trieblich verbindet. Das Planetengetriebe 37 weist neben dem Sonnenrad 35 Planetenräder 39 auf, die von einem nicht gezeigten festgesetzten Planetenradträger getragen werden. Diese kämmen sowohl mit dem Sonnenrad 35 als auch mit einer nicht näher gezeigten Innenverzahnung 41, die an der Innenseite der Umfangswand 19 des Stators 17 ausgebildet ist.

Für eine leichtgängige Drehbewegung ist das Rotor-Hohlrad 28 mit einem Drehlager 43 auf dem Eisenkern 27 drehbar abgestützt. Das Drehlager 43 ist gemäß der Fig. 3 auf den Befestigungszapfen 31 aufgeschoben und an einer Ringschulter 45 der im Eisenkern 27 gebildeten Abstufung abgestützt. Das Drehlager 43 befindet sich gemäß der Fig. 3 bauraumgünstig zusammen mit dem Eisenkern 27 innerhalb des vom Hohlrad 28 umgrenzten Hohlraumes.

Gemäß der Fig. 3 ist auf einem abgestuften Umfangsabschnitt der Umfangswand 19 des Stators 17 ein weiteres Drehlager 47 aufgeschoben, über das die Haltekonsole 16 des Fahrzeugaufbaus 7 drehbar mit dem Stator 17 des Generators verbunden ist.

Der Generator des elektrischen Dämpfers 15 ist dabei so ausgelegt, dass die Drehachse A des Stators 17 sowie des Rotor-Hohlrades 28 koaxial zur Schwenkachse D des am Fahrzeugaufbau 7 angelenkten Radführungselements 11 verläuft.

## Patentansprüche

1. Elektrischer Dämpfer für ein Fahrzeug zum Dämpfen einer Relativbewegung (B) zwischen zwei Bauteilen (7, 11), mit einem durch die Relativbewegung (B) antreibbaren elektrischen Generator zur Erzeugung einer Induktionsspannung, der einen Stator (17), einen Rotor (24) sowie zugehörige Induktionswicklungen (23) und Feldmagnete (25) aufweist, wobei der Rotor (24) zweiteilig mit einem inneren, feststehenden Eisenkern (27) und einem radial äußeren Hohlrad (28) ausgeführt ist, das die Induktionswicklungen (23) oder die Feldmagnete (25) trägt, und wobei sowohl der Stator (17) als auch das durchmesserkleinere Rotor-Hohlrad (28) becherförmig ausgestaltet sind und mit den zugewandten offenen Stirnseiten ineinander geschoben sind, **dadurch gekennzeichnet, dass** die Relativbewegung (B) zwischen den Bauteilen (7, 11) über ein Getriebe (37) zum Hohlrad (28) des Rotors (24) übertragbar ist, und dass der Stator (17) als ein Getriebeelement in dem Getriebe (37) integriert ist.

2. Elektrischer Dämpfer nach Anspruch 1, **dadurch gekennzeichnet, dass** der Generator ein Innenpolgenerator ist, bei dem der Stator (17) die Induktionswicklungen (23) trägt und das Hohlrad (28) des Rotors (24) die Feldmagnete (25) trägt.

3. Elektrischer Dämpfer nach Anspruch 1 oder 2, **dadurch gekennzeichnet, dass** der feststehende Eisenkern (27) über einen freien Spalt (29, 30) von dem Hohlrad (28) des Rotors (24) beabstandet ist.

4. Elektrischer Dämpfer nach Anspruch 3, **dadurch gekennzeichnet, dass** der freie Spalt (29, 20) zwischen dem Hohlrad (28) und dem feststehenden Eisenkern (27) ein Luftspalt ist oder mit einem hochpermeablen Fluid (34) gefüllt ist.

5. Elektrischer Dämpfer nach einem der Ansprüche 1 bis 4, **dadurch gekennzeichnet, dass** die Feldmagnete (25) als Permanentmagnete oder als Elektromagnete ausgeführt sind, die mit einem Erregerstrom aktivierbar sind.

6. Elektrischer Dämpfer nach einem der vorhergehenden Ansprüche, **dadurch gekennzeichnet, dass** das Hohlrad (28) des Rotors (24) ein rotationssymmetrischer becherförmiger Hohlkörper ist, dessen eine Stirnseite in eine Antriebswelle (33) übergeht, und in dessen anderer Stirnseite der feststehende Eisenkern (27) in einen Hohlraum des Hohlrads (28) einragt.

7. Elektrischer Dämpfer nach einem der vorhergehenden Ansprüche, **dadurch gekennzeichnet, dass** der im Hohlrad (28) des Rotors (24) angeordnete Eisenkern (27) an einer stirnseitigen Tragwand (21) des becherförmigen Stators (17) befestigt ist, und/oder der Stator (17) zusammen mit dem Eisenkern (27) eine einstückige Baueinheit bildet.

8. Elektrischer Dämpfer nach einem der vorhergehenden Ansprüche, **dadurch gekennzeichnet, dass** das Hohlrad (28) über ein Drehlager (43) auf dem feststehenden Eisenkern (27) abgestützt ist, wobei das Drehlager (43) insbesondere im Hohlraum des Hohlrads (28) angeordnet ist.

9. Elektrischer Dämpfer nach einem der vorhergehenden Ansprüche, **dadurch gekennzeichnet, dass** die ersten und zweiten Bauteile (7, 11) über eine Schwenkachse (D) drehgelenkig miteinander verbunden sind, wobei insbesondere die Schwenkachse (D) koaxial zur Drehachse (A) des Rotors (24) und/oder des Stators (17) angeordnet ist.

10. Elektrischer Dämpfer nach Anspruch 9, **dadurch gekennzeichnet, dass** das erste Bauteil (11), insbesondere eine in einer Radaufhängung des Fahrzeugs eingesetzte Koppel bzw. ein Radführungselement, drehfest mit dem Stator (17) verbunden ist, der über ein Drehlager (47) im zweiten Bauteil (7) drehgelagert ist.

11. Elektrischer Dämpfer nach Anspruch 9 oder 10, **dadurch gekennzeichnet, dass** der Generator in einem Befestigungsauge (13) des ersten Bauteils (11) eingesetzt ist.

## Claims

1. Electric damper for a vehicle for damping a relative movement (B) between two components (7, 11), with an electrical generator drivable by the relative movement (B) for generating an induction voltage, the generator comprising a stator (17), a rotor (24) and associated induction windings (23) and field magnets (25), wherein the rotor (24) is configured two-part and has an inner stationary iron core (27) and a radially outer ring gear (28) which carries the induction windings (23) or the field magnets (25), and wherein the stator (17) and the ring gear (28) of the rotor that is smaller in diameter are cup-shaped and slid into each other with the facing open front ends, **characterised in that** the relative movement (B) between the components (7, 11) can be transmitted to the ring gear (28) of the rotor (24) via a gearbox (37), and that the stator (17) is integrated in the gearbox (37) as a gearbox element.

2. Electric damper according to claim 1, **characterised in that** the generator is an inner-pole generator in which the stator (17) carries the induction windings (23) and the ring gear (28) of the rotor (24) carries the field magnets (25).

3. Electric damper according to claim 1 or 2, **characterised in that** the stationary iron core (27) is spaced apart from the ring gear (28) of the rotor (24) by a free gap (29, 30).

4. Electric damper according to claim 3, **characterised in that** the free gap (29, 20) between the ring gear (28) and the stationary iron core (27) is an air gap or is filled with a highly permeable fluid (34).

5. Electric damper according to any of claims 1 to 4, **characterised in that** the field magnets (25) are configured as permanent magnets or as electromagnets which are activatable with an exciting current.

6. Electric damper according to any of the preceding claims, **characterised in that** the ring gear (28) of the rotor (24) is a rotationally symmetric cup-shaped hollow body, one front side of which transitions into a drive shaft (33) and in the other front side of which the stationary iron core (27) protrudes into a hollow space of the ring gear (28).

7. Electric damper according to any of the preceding claims, **characterised in that** the iron core (27) arranged in the ring gear (28) of the rotor (24) is fastened to a front side support wall (21) of the cup shaped stator (17), and/or the stator (17) together with the iron core (27) forms a one-piece component.

8. Electric damper according to any of the preceding claims, **characterised in that** the ring gear (28) is supported on the stationary iron core (27) via the rotary bearing (43), wherein the rotary bearing (43) is in particular arranged in the hollow space of the ring gear (28).

9. Electric damper according to any of the preceding claims, **characterised in that** the first and second components (7, 11) are pivotally connected to one another via a pivot axis (D), wherein the pivot axis (D) is in particular arranged coaxial to the rotation axis (A) of the rotor (24) and/or the stator (17).

10. Electric damper according to claim 9, **characterised in that** the first component (11), in particular a coupler or wheel control element inserted into a wheel suspension of the vehicle, is non-rotatably connected to the stator (17), the stator being rotatably supported in the second component (7) via a rotary bearing (47).

11. Electric damper according to claim 9 or 10, **characterised in that** the generator is inserted into a fastening eye (13) of the first component (11).

## Revendications

1. Amortisseur électrique pour un véhicule servant à l'amortissement d'un mouvement relatif (B) entre deux composants (7, 11), avec un générateur électrique pouvant être entraîné par le mouvement relatif (B) pour la génération d'une tension d'induction, qui présente un stator (17), un rotor (24) ainsi que des enroulements d'induction afférents (23) et des aimants de champ (25), dans lequel le rotor (24) est réalisé en deux parties avec un noyau de fer (27) fixe intérieur et une roue creuse (28) radialement extérieure qui porte les enroulements d'induction (23) ou les aimants de champ (25), et dans lequel non seulement le stator (17) mais aussi la roue creuse de rotor (28) à plus petit diamètre sont configurés en forme de coupe et sont poussés l'un dans l'autre avec les côtés avant ouverts tournés, **caractérisé en ce que** le mouvement relatif (B) entre les composants (7, 11) peut être transmis par le biais d'un engrenage (37) à la roue creuse (28) du rotor (24), et **en ce, que** le stator (17) est intégré en tant qu'élément d'engrenage dans l'engrenage (37).

2. Amortisseur électrique selon la revendication 1, **caractérisé en ce que** le générateur est un générateur à pôle intérieur, pour lequel le stator (17) porte les enroulements d'induction (23) et la roue creuse (28) du rotor (24) porte les aimants de champ (25).

3. Amortisseur électrique selon la revendication 1 ou 2, **caractérisé en ce que** le noyau de fer (27) fixe est espacé par le biais d'une fente libre (29, 30) de la roue creuse (28) du rotor (24).

4. Amortisseur électrique selon la revendication 3, **caractérisé en ce que** la fente libre (29, 20) entre la roue creuse (28) et le noyau de fer (27) fixe est une fente d'air ou est remplie d'un fluide hautement perméable (34).

5. Amortisseur électrique selon l'une quelconque des revendications 1 à 4, **caractérisé en ce que** les aimants de champ (25) sont réalisés en tant qu'aimants permanents ou en tant qu'électroaimants qui peuvent être activés avec un courant d'excitation.

6. Amortisseur électrique selon l'une quelconque des revendications précédentes, **caractérisé en ce que** la roue creuse (28) du rotor (24) est un corps creux en forme de coupe symétrique en rotation, dont un côté avant passe en un arbre d'entraînement (33) et dans l'autre côté avant duquel le noyau de fer fixe (27) pénètre dans un espace creux de la roue creuse (28).

7. Amortisseur électrique selon l'une quelconque des revendications précédentes, **caractérisé en ce que** le noyau de fer (27) disposé dans la roue creuse (28) du rotor (24) est fixé, à une paroi porteuse (21) côté avant du stator (17) en forme de coupe, et/ou le stator (17) forme conjointement avec le noyau de fer (27) une unité de construction d'un seul tenant.

8. Amortisseur électrique selon l'une quelconque des revendications précédentes, **caractérisé en ce que** la roue creuse (28) est en appui par le biais d'un palier rotatif (43) sur le noyau de fer (27) fixe, dans lequel le palier rotatif (43) est disposé en particulier dans l'espace creux de la roue creuse (28).

9. Amortisseur électrique selon l'une quelconque des revendications précédentes, **caractérisé en ce que** les premier et second composants (7, 11) sont raccordés l'un à l'autre par articulation rotative par le biais d'un axe de pivotement (D), dans lequel en particulier l'axe de pivotement (D) est disposé coaxialement à l'axe de rotation (A) du rotor (24) et/ou du stator (17).

10. Amortisseur électrique selon la revendication 9, **caractérisé en ce que** le premier composant (11), en particulier un couplage inséré dans une suspension de roue du véhicule ou un élément de guidage de roue est raccordé de manière solidaire en rotation au stator (17) qui est logé en rotation par le biais d'un palier rotatif (47) dans le second composant (7).

11. Amortisseur électrique selon la revendication 9 ou 10, **caractérisé en ce que** le générateur est inséré dans un oeil de fixation (13) du premier composant (11).
